# EUROPEAN PATENT APPLICATION

(11) **EP 4 844 863 A1**
(43) Date of publication of application: **25.11.2026**
(21) Application number: 25882832.6
(22) Date of filing: 11.09.2025
(51) Int. Cl.: H01M 10/0562, C01B 25/14, H01M 10/052, H01M 10/0585

(54) **LITHIUM-ION CONDUCTIVE SULFIDE-BASED COMPOUND AND METHOD FOR PRODUCING SAME**

(30) Priority: 25.10.2024 KR 20240147313
(71) Applicant: EcoPro BM Co., Ltd, Cheongju-si, Chungcheongbuk-do 28116 (KR)
(72) Inventor: YOON, Eui Shin, Cheongju-si, Chungcheongbuk-do 28116 (KR); JUNG, Hyun Su, Cheongju-si, Chungcheongbuk-do 28116 (KR); YANG, A Reum, Cheongju-si, Chungcheongbuk-do 28116 (KR); KWON, Woo Sin, Cheongju-si, Chungcheongbuk-do 28116 (KR)
(74) Representative: Prüfer & Partner mbB Patentanwälte · Rechtsanwälte
(86) International application number: PCT/KR2025/014150
(87) International publication number: WO 2026/089290

(57) **Abstract**

The present disclosure relates to a method of manufacturing a lithium-ion-conductive sulfide-based compound, and more specifically, the present disclosure relates to a method of rapidly controlling the particle size distribution during the pulverization of a sulfide-based solid electrolyte having an argyrodite-type crystal structure.

## Description

### BACKGROUND

### 1. Field of the Invention

The present disclosure relates to a method of manufacturing a lithium-ion-conductive sulfide-based compound, and more specifically, the present disclosure relates to a method of rapidly controlling the particle size distribution during the pulverization of a sulfide-based solid electrolyte having an argyrodite-type crystal structure.

### 2. Discussion of Related Art

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

However, such an organic electrolyte solution or polymer electrolyte typically uses a flammable organic solvent. Therefore, when an abnormally high temperature occurs due to internal or external factors of the lithium secondary battery, a fire or explosion may occur due to the electrolyte solution.

Owing to such safety problems, solid batteries to which a solid electrolyte is applied as a substitute for liquid-type batteries are drawing attention. Solid batteries have high stability, and their practical application as next-generation batteries having a high energy density is expected.

Among the solid electrolytes used in lithium secondary batteries, a compound that has currently received significant attention is the sulfide-based solid electrolyte. Various crystal structures of sulfide-based solid electrolytes are known, and one of them is an argyrodite-type crystal structure.

A solid electrolyte can be used to replace a separator, or can be mixed with a positive electrode active material to form a positive electrode. In particular, a solid electrolyte for a positive electrode composite should have a small average particle size.

However, a sulfide-based solid electrolyte having an argyrodite-type crystal structure has ductility, so that it is difficult to adjust it to a desired particle size during pulverization, and even when the average particle size is adjusted, there is a problem in that the particle size distribution is not homogeneous.

In addition, a solid electrolyte has a lower ionic conductivity than a liquid electrolyte, and there is a problem in that it can be easily deteriorated by a decomposition reaction inside the battery. In particular, a sulfide-based solid electrolyte may react with moisture and/or oxygen in the air to generate hydrogen sulfide. Since the pulverization of a sulfide-based solid electrolyte having an argyrodite-type crystal structure takes a longer time, there is a problem in that it can be easily deteriorated during this process.

### SUMMARY OF THE INVENTION

According to the present disclosure, one object is to provide a method of manufacturing a lithium-ion-conductive sulfide-based compound that can control the particle size of a sulfide-based compound having an argyrodite-type crystal structure more rapidly.

The objects of the present disclosure are not limited to the above-described objects, and other objects and advantages of the present disclosure that are not described can be understood by the following description and will be more clearly understood by the embodiments of the present disclosure. In addition, it is apparent that the objects and advantages of the present disclosure can be realized by the means and combinations thereof indicated in the claims.

According to an aspect of the present disclosure, there is provided a method of manufacturing a lithium-ion-conductive sulfide-based compound, comprising: (a) preparing a sulfide-based compound comprising a crystal phase of an argyrodite-type crystal structure; and (b) pulverizing the sulfide-based compound to obtain finely pulverized sulfide-based compound particles having an average particle size (D₅₀) of 0.5 to 1.0 µm.

In an embodiment, the crystal phase of the argyrodite-type crystal structure may be represented by the following Chemical Formula 1.

[Chemical Formula 1] Li₇₋ₓPS₆₋ₓXₓ

wherein X is at least one selected from the group consisting of Cl, Br, and I, and 0≤x≤2.

In step (b), the pulverization may be repeated 2 to 15 times.

Here, the pulverization may be performed by wet pulverization of a slurry comprising a solvent and the sulfide-based compound in a bead mill.

Meanwhile, the pulverization may be performed at a temperature of 5°C or lower.

In addition, the pulverization is performed using a bead mill, a slurry tank connected to the bead mill, and a chiller connected to both the bead mill and the slurry tank, wherein cooling water may be circulated in the order of the chiller, the bead mill, the slurry tank, and the chiller, and wherein a temperature of the cooling water may be maintained at 5°C or lower.

Here, the slurry tank may be provided with a saw-type stirring blade, and the bead mill may be charged with beads in an amount of 35 to 90 wt% based on the slurry.

Meanwhile, the slurry tank may be provided with an auxiliary stirring device and a stirring blade having a shaft, and the auxiliary stirring device may be positioned to be spaced apart from the shaft of the stirring blade to form a vortex in the slurry.

Meanwhile, an inert gas may be introduced into the slurry tank during the pulverization.

At this time, the oxygen concentration of the slurry tank may be less than 21.2 wt%.

According to another aspect of the present disclosure, there is provided a lithium-ion-conductive sulfide-based compound, which is manufactured by the above-described manufacturing method, has an average particle size (D₅₀) of 0.5 to 1.0 µm, and has an ionic conductivity at 25°C of more than 1.17 mS/cm.

### BRIEF DESCRIPTION OF THE DRAWINGS

The objects, features, and advantages of the present disclosure will become more apparent from the following description of exemplary emb odiments with reference to the accompanying drawings, in which:

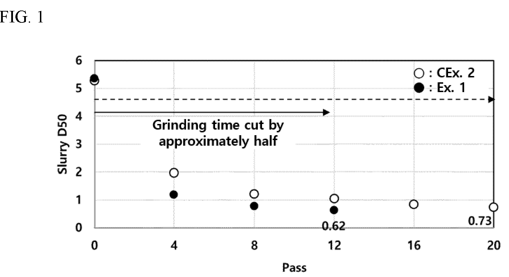

FIG. 1 shows the particle average particle size of a sulfide-based compound according to the number of bead mill pulverization processes of the sulfide-based compound according to one example of the present disclosure.

### DETAILED DESCRIPTION OF EXEMPLARY EMBODIMENTS

For a better understanding of the present disclosure, certain terms are defined herein for convenience. Unless otherwise defined herein, scientific and technical terms used in the present disclosure will have meanings commonly understood by those skilled in the art. In addition, unless otherwise specified in the context, the singular should be understood to include the plural, and the plural should be understood to include the singular. Amounts or ratios indicated herein are molar amounts or molar ratios, unless otherwise specified in the context.

### Method of manufacturing a lithium-ion-conductive sulfide-based compound

The method of manufacturing a lithium-ion-conductive sulfide-based compound according to one aspect of the present disclosure may comprise: (a) preparing a sulfide-based compound comprising a crystal phase of an argyrodite-type crystal structure; and (b) pulverizing the sulfide-based compound to obtain finely pulverized sulfide-based compound particles having an average particle size (D₅₀) of 0.5 to 1.0 µm.

The step (a) may be a step of synthesizing the lithium-ion-conductive sulfide-based compound, or preparing the sulfide-based compound before being pulverized.

In an example, the average particle size (D₅₀) of the sulfide-based compound may be more than 1 µm, for example, 1.01 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 12.5 µm, 15 µm, 17.5 µm, 20 µm, 22.5 µm, 25 µm, 27.5 µm, 30 µm, 32.5 µm, 35 µm, 37.5 µm, 40 µm, 42.5 µm, 45 µm, 47.5 µm, 50 µm, or a range between two of these values, but is not limited thereto.

For example, the lithium-ion-conductive sulfide-based compound may be obtained by mixing lithium sulfide (Li₂S) powder, phosphorus sulfide (P₂S₅) powder, and lithium halide (LiX) powder, and sintering the mixture at a temperature of 350 to 500°C under an inert atmosphere, for example, at 350°C, 355°C, 360°C, 365°C, 370°C, 375°C, 380°C, 385°C, 390°C, 395°C, 400°C, 405°C, 410°C, 415°C, 420°C, 425°C, 430°C, 435°C, 440°C, 445°C, 450°C, 455°C, 460°C, 465°C, 470°C, 475°C, 480°C, 485°C, 490°C, 495°C, 500°C, or a range between two of these values, or by sintering at a temperature of 350 to 650°C under an atmosphere comprising hydrogen sulfide gas, for example, at 350°C, 355°C, 360°C, 365°C, 370°C, 375°C, 380°C, 385°C, 390°C, 395°C, 400°C, 405°C, 410°C, 415°C, 420°C, 425°C, 430°C, 435°C, 440°C, 445°C, 450°C, 455°C, 460°C, 465°C, 470°C, 475°C, 480°C, 485°C, 490°C, 495°C, 500°C, 505°C, 510°C, 515°C, 520°C, 525°C, 530°C, 535°C, 540°C, 545°C, 550°C, 555°C, 560°C, 565°C, 570°C, 575°C, 580°C, 585°C, 590°C, 595°C, 600°C, 605°C, 610°C, 615°C, 620°C, 625°C, 630°C, 635°C, 640°C, 645°C, 650°C, or a range between two of these values, but is not limited thereto.

Here, each component may be stoichiometrically calculated and mixed so as to have a target composition.

The sulfide-based solid electrolyte compound has lithium ion conductivity and may have a crystal phase of an argyrodite-type crystal structure.

The argyrodite-type crystal structure refers to the same structure as argyrodite (Ag₈GeS₆), a silver-germanium-sulfur mineral. The argyrodite-type crystal structure may have an orthorhombic (Pna2₁) phase and a cubic (F-43m) phase, among which the cubic crystal structure may have high lithium ion conductivity. Typically, the argyrodite-type crystal structure exhibits a cubic phase having excellent lithium ion conductivity at a high temperature, and exhibits an orthorhombic phase at a low temperature.

For example, Li₇PS₆, Li₆P_{S}5X (X is at least one of Cl, Br, and I), and the like are known as lithium-ion-conductive solid electrolyte compounds having an argyrodite-type crystal structure.

In an embodiment, the crystal phase of the argyrodite-type crystal structure may be represented by the following Chemical Formula 1:

[Chemical Formula 1] Li₇₋ₓPS₆₋ₓXₓ

wherein X is at least one selected from the group consisting of Cl, Br, and I, and 0≤x≤2.

Here, in the crystal phase of the argyrodite-type crystal structure, the molar ratio Li/P of the lithium (Li) element to the phosphorus (P) element may be 5.00 to 6.50, for example, 5.00, 5.05, 5.10, 5.15, 5.20, 5.25, 5.30, 5.35, 5.40, 5.45, 5.50, 5.55, 5.60, 5.65, 5.70, 5.75, 5.80, 5.85, 5.90, 5.95, 6.00, 6.05, 6.10, 6.15, 6.20, 6.25, 6.30, 6.35, 6.40, 6.45, 6.50, or a range between two of these values, but is not limited thereto.

Adjusting the value of Li/P can prevent the phenomenon in which the ionic conductivity is lowered as the arrangement and distribution ratio of lithium ions inside the compound change.

In addition, in the crystal phase of the argyrodite-type crystal structure, the molar ratio S/P of the sulfur (S) element to the phosphorus (P) element may be 4.00 to 6.00, for example, 4.00, 4.05, 4.10, 4.15, 4.20, 4.25, 4.30, 4.35, 4.40, 4.45, 4.50, 4.55, 4.60, 4.65, 4.70, 4.75, 4.80, 4.85, 4.90, 4.95, 5.00, 5.05, 5.10, 5.15, 5.20, 5.25, 5.30, 5.35, 5.40, 5.45, 5.50, 5.55, 5.60, 5.65, 5.70, 5.75, 5.80, 5.85, 5.90, 5.95, 6.00, or a range between two of these values, but is not limited thereto.

Adjusting the S/P value can secure a balance between the chemical stability and high ionic conductivity of the compound.

In the argyrodite-type crystal structure, replacing sulfur with a halogen anion stabilizes the cubic phase, so that a cubic structure can be obtained even at room temperature.

The substituted halogen element forms a vacancy at a Li site inside the argyrodite unit cell, thereby reducing the activation energy to form a new lithium ion conduction path, and as a result, the lithium ion conductivity can be improved.

Meanwhile, the crystal phase of the argyrodite-type crystal structure may comprise two or more kinds of halogen elements. As halogen elements, F, Cl, Br, I, and the like exist, but Cl, Br, I, and the like can typically be used in a compound having an argyrodite-type crystal structure.

Here, in the crystal phase of the argyrodite-type crystal structure, the molar ratio X/P of the halogen (X) element to the phosphorus (P) element may be 1.00 to 2.00, for example, 1.00, 1.02, 1.04, 1.06, 1.08, 1.10, 1.12, 1.14, 1.16, 1.18, 1.20, 1.22, 1.24, 1.26, 1.28, 1.30, 1.32, 1.34, 1.36, 1.38, 1.40, 1.42, 1.44, 1.46, 1.48, 1.50, 1.52, 1.54, 1.56, 1.58, 1.60, 1.62, 1.64, 1.66, 1.68, 1.70, 1.72, 1.74, 1.76, 1.78, 1.80, 1.82, 1.84, 1.86, 1.88, 1.90, 1.92, 1.94, 1.96, 1.98, 2.00, or a range between two of these values, but is not limited thereto.

In an example, when the halogen (X) element comprises Cl and Br, the content of Cl may be higher than the content of Br. In this case, the content of Br may be 0.05 to 0.5 mol based on 1 mol of the phosphorus (P) element, for example, 0.05 mol, 0.06 mol, 0.07 mol, 0.08 mol, 0.09 mol, 0.1 mol, 0.11 mol, 0.12 mol, 0.13 mol, 0.14 mol, 0.15 mol, 0.16 mol, 0.17 mol, 0.18 mol, 0.19 mol, 0.2 mol, 0.21 mol, 0.22 mol, 0.23 mol, 0.24 mol, 0.25 mol, 0.26 mol, 0.27 mol, 0.28 mol, 0.29 mol, 0.3 mol, 0.31 mol, 0.32 mol, 0.33 mol, 0.34 mol, 0.35 mol, 0.36 mol, 0.37 mol, 0.38 mol, 0.39 mol, 0.4 mol, 0.41 mol, 0.42 mol, 0.43 mol, 0.44 mol, 0.45 mol, 0.46 mol, 0.47 mol, 0.48 mol, 0.49 mol, 0.5 mol, or a range between two of these values, but is not limited thereto.

However, the argyrodite-type crystal structure has a problem in that it is sensitive to air, humidity, and the like, so that its performance is easily degraded. Therefore, a compound having an argyrodite-type crystal structure may be deteriorated even during the manufacturing process.

In particular, a sulfide-based compound used for a positive electrode composite application must be finely pulverized to have a small particle size in order to increase the contact area with the positive electrode active material, and since such a compound has a large specific surface area, such deterioration may occur more easily.

The step (b) may be a step of pulverizing the prepared sulfide-based compound to obtain finely pulverized particles having an average particle size (D₅₀) of 0.5 to 1.0 µm, for example, 0.5 µm, 0.51 µm, 0.52 µm, 0.53 µm, 0.54 µm, 0.55 µm, 0.56 µm, 0.57 µm, 0.58 µm, 0.59 µm, 0.6 µm, 0.61 µm, 0.62 µm, 0.63 µm, 0.64 µm, 0.65 µm, 0.66 µm, 0.67 µm, 0.68 µm, 0.69 µm, 0.7 µm, 0.71 µm, 0.72 µm, 0.73 µm, 0.74 µm, 0.75 µm, 0.76 µm, 0.77 µm, 0.78 µm, 0.79 µm, 0.8 µm, 0.81 µm, 0.82 µm, 0.83 µm, 0.84 µm, 0.85 µm, 0.86 µm, 0.87 µm, 0.88 µm, 0.89 µm, 0.9 µm, 0.91 µm, 0.92 µm, 0.93 µm, 0.94 µm, 0.95 µm, 0.96 µm, 0.97 µm, 0.98 µm, 0.99 µm, 1.0 µm, or a range between two of these values.

The finely pulverized particles can also be used for manufacturing a solid electrolyte membrane that replaces a separator, but may be more suitable for manufacturing a positive electrode that is composited by mixing with a positive electrode active material.

Meanwhile, since the sulfide-based compound having an argyrodite-type crystal structure has ductility, it is difficult to have a uniform particle size through pulverization. Therefore, it is necessary to apply a pulverization process suitable therefor.

In the step (b), the pulverization may be performed by repeating the pulverization process 2 to 15 times. For example, it may be performed 2, 3, 4, 5, 6, 7, 8, 9, 10, 11, 12, 13, 14, or 15 times. If necessary, the pulverization may comprise 15 or more pulverization processes, but if an excessively large number of processes is performed, the sulfide-based compound may be easily deteriorated.

The pulverization may be performed using, but is not limited to, at least one selected from the group consisting of a ball mill, a pebble mill, a rod mill, a roller mill, a colloid mill, an impact mill, a jet mill, a bead mill, a vibratory mill, an attrition mill, a disk mill, and a classifier mill.

However, the pulverization may be performed by wet pulverization of a slurry comprising a solvent and the sulfide-based compound in a bead mill.

A bead mill is equipment that can adjust the particle size through collision with small-sized beads by introducing the material together with beads into a pulverizing vessel and then pulverizing. The material to be pulverized can be mixed in a solvent and then introduced into a pulverizing vessel for use.

Since the use of a bead mill allows the particle size to be controlled down to the nano-size level, a sulfide-based solid electrolyte compound at the sub-micron (0.5 to 1.0 µm) level can be manufactured. Such a fine-sized sulfide-based compound can play an important role in a positive electrode composite material, that is, a catholyte.

Applying a wet pulverization method using a bead mill can be advantageous for forming relatively small-sized finely pulverized particles.

Here, as the solvent, any solvent can be used without limitation as long as it has no reactivity with the sulfide-based compound.

For example, hydrocarbon-based solvents such as toluene, xylene, and heptane, or silicone oil, carbonate-based solvents, ester-based solvents, ether-based solvents, ketone-based solvents, amine-based solvents, phosphine-based solvents, and the like can also be used.

For example, as the carbonate-based solvent, dimethyl carbonate (DMC), diethyl carbonate (DEC), ethyl methyl carbonate (EMC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like can be used.

As the ester-based solvent, methyl acetate, ethyl acetate, n-propyl acetate, dimethyl acetate, methyl propionate, ethyl propionate, γ-butyrolactone, decanolide, valerolactone, mevalonolactone, caprolactone, and the like can be used.

As the ether-based solvent, dibutyl ether, tetraglyme, diglyme, dimethoxyethane, 2-methyltetrahydrofuran, tetrahydrofuran, and the like can be used, and as the ketone-based solvent, cyclohexanone and the like can be used.

In addition, as the amine-based solvent, triethylamine, triphenylamine, and the like can be used. As the phosphine-based solvent, triethylphosphine and the like can be used.

In addition, nitriles such as R-CN (R is a linear, branched, or cyclic hydrocarbon group having 2 to 20 carbon atoms, and may comprise a double-bond aromatic ring or an ether bond), amides such as dimethylformamide, dioxolanes such as 1,3-dioxolane, and sulfolanes, and the like can also be used.

Meanwhile, the pulverization may be performed by further comprising a dispersant as needed. The dispersant can increase the efficiency of the pulverization process, thereby helping to obtain a desired particle size with a smaller number of pulverization processes. In addition, the dispersant can narrow the particle size distribution by suppressing the heat generated during the pulverization process from increasing the ductility of the sulfide-based compound.

As the dispersant, any one can be used without limitation as long as it has no reactivity with the sulfide-based compound or the aprotic solvent and has excellent dispersibility in the solvent.

In general, when manufacturing a sulfide-based solid electrolyte for a catholyte application, a pulverization time of at least 30 minutes or more is required. However, as the pulverization time increases, the atmospheric exposure time becomes longer, resulting in changes in physical properties such as a decrease in the ionic conductivity of the sulfide-based solid electrolyte compound, and a decrease in productivity.

Therefore, the pulverization may be performed at a temperature of 5°C or lower, for example, 5°C, 4.5°C, 4°C, 3.5°C, 3°C, 2.5°C, 2°C, 1.5°C, 1°C, 0.5°C, 0°C, -0.5°C, -1°C, - 1.5°C, -2°C, -2.5°C, -3°C, -3.5°C, -4°C, -4.5°C, -5°C, or a range between two of these values.

By performing the pulverization at a low temperature, the ductility of the sulfide-based compound is minimized, and as a result, the pulverization efficiency is improved, so that the particle size can be controlled more easily.

In particular, since the particle size distribution may become non-uniform due to the heat generated during the pulverization process, the particle size distribution of the finely pulverized particles may vary depending on the temperature control method.

In an example, the pulverization is performed using a bead mill, a slurry tank connected to the bead mill, and a chiller connected to both the bead mill and the slurry tank, wherein cooling water may be circulated in the order of the chiller, the bead mill, the slurry tank, and the chiller, and wherein a temperature of the cooling water may be maintained at 5°C or lower, for example, 5°C, 4.5°C, 4°C, 3.5°C, 3°C, 2.5°C, 2°C, 1.5°C, 1°C, 0.5°C, 0°C, -0.5°C, -1°C, - 1.5°C, -2°C, -2.5°C, -3°C, -3.5°C, -4°C, -4.5°C, -5°C, or a range between two of these values.

When the cooling water is circulated as described above, more efficient cooling is possible, and the temperature of the slurry itself becomes lower, so that the ductility of the sulfide-based compound is suppressed, whereby finely pulverized particles can be manufactured more rapidly. As a result, the deterioration of the manufactured sulfide-based compound can be suppressed.

Meanwhile, after each pulverization pass of the slurry comprising the sulfide-based compound is performed in the bead mill, the slurry is recovered to the slurry tank, and agglomeration between particles is suppressed within the slurry tank, so that the pulverization efficiency can be increased.

In an embodiment, the slurry tank is provided with a saw-type stirring blade, and beads in an amount of 35 to 90 wt%, for example, 35 wt%, 37.5 wt%, 40 wt%, 42.5 wt%, 45 wt%, 47.5 wt%, 50 wt%, 52.5 wt%, 55 wt%, 57.5 wt%, 60 wt%, 62.5 wt%, 65 wt%, 67.5 wt%, 70 wt%, 72.5 wt%, 75 wt%, 77.5 wt%, 80 wt%, 82.5 wt%, 85 wt%, 87.5 wt%, 90 wt%, or a range between two of these values, based on the slurry introduced into the bead mill, may be introduced. If the beads are not sufficiently filled, pulverization may be difficult, and if filled excessively, coarse particles may be formed.

As the beads, ZrO₂, Al₂O₃, Y₂O₃, HfO₂, and the like can be selected according to the purpose, and ones having an average particle size of 0.05 to 1.5 mm, for example, 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, or a range between two of these values, can be used, but they are not limited thereto.

Although the hydrodynamic mechanism thereof is not known, when the argyrodite-type sulfide-based compound is pulverized to a sub-micron size under the above-described temperature conditions, stirring blades such as a propeller type, a turbine type, a hydrofoil type, a Rushton type, a Smith type, an anchor type, and a ribbon type may have difficulty sufficiently suppressing agglomeration. On the other hand, when the saw-type stirring blade is used, the agglomeration of the sulfide-based compound could be suppressed and the desired particle size could be obtained rapidly.

When the efficiency of the pulverization increases, the operating time decreases, and not only is it possible to form finely pulverized particles in a shorter time, but also the deterioration of the sulfide-based compound is minimized, so that the quality such as ionic conductivity can be improved.

Meanwhile, the slurry tank is provided with an auxiliary stirring device, and the auxiliary stirring device is positioned to be spaced apart from the stirring blade shaft of the slurry tank to form a vortex in the slurry.

Here, the rotation shaft of the stirring blade is positioned at the center of the slurry tank, and the auxiliary stirring device is installed at a position spaced apart from the rotation shaft to form a vortex in the flow of the slurry.

Since the sulfide-based compound is easily agglomerated and sensitive to heat during pulverization, forming a vortex using the auxiliary stirring device can suppress agglomeration and improve the pulverization efficiency by dispersing the heat. As a result, finely pulverized particles can be formed while suppressing the deterioration of the sulfide-based compound.

In an example, the auxiliary stirring device may be fixed to a rod-shaped structure, or may be one to which a rotatable rod-shaped structure is connected. Meanwhile, a rod-shaped structure may be further connected to the distal end of the rod-shaped structure in a direction parallel to the rod-shaped structure, but its shape is not limited as long as it can form a vortex in the slurry.

In addition, an inert gas may be introduced into the slurry tank during the pulverization. As the inert gas, for example, N₂, Ar, Ne, and the like can be used.

At this time, the oxygen concentration of the slurry tank may be less than 21.2 wt%, for example, 21.2 wt%, 21 wt%, 20.5 wt%, 20 wt%, 19.5 wt%, 19 wt%, 18.5 wt%, 18 wt%, 17.5 wt%, 17 wt%, 16.5 wt%, 16 wt%, 15.5 wt%, 15 wt%, 14.5 wt%, 14 wt%, 13.5 wt%, 13 wt%, 12.5 wt%, 12 wt%, 11.5 wt%, 11 wt%, 10.5 wt%, 10 wt%, 9.5 wt%, 9 wt%, 8.5 wt%, 8 wt%, 7.5 wt%, 7 wt%, 6.5 wt%, 6 wt%, 5.5 wt%, 5 wt%, 4.5 wt%, 4 wt%, 3.5 wt%, 3 wt%, 2.5 wt%, 2 wt%, 1.5 wt%, 1 wt%, 0.5 wt%, or a range between two of these values.

When the oxygen concentration in the slurry tank is lowered, the deterioration of the sulfide-based compound can be suppressed.

In addition, the ionic conductivity at 25°C of the finely pulverized sulfide-based compound may be more than 1.17 mS/cm.

### Lithium-ion-conductive sulfide-based compound

The lithium-ion-conductive sulfide-based compound according to one aspect of the present disclosure is obtained by the above-described manufacturing method, and is a particulate sulfide-based compound comprising a crystal phase of an argyrodite-type crystal structure, which has an average particle size (D₅₀) of 0.5 to 1.0 µm and an ionic conductivity at 25°C of more than 1.17 mS/cm, for example, 1.18 mS/cm, 1.2 mS/cm, 1.25 mS/cm, 1.3 mS/cm, 1.35 mS/cm, 1.4 mS/cm, 1.45 mS/cm, 1.5 mS/cm, 1.55 mS/cm, 1.6 mS/cm, 1.65 mS/cm, 1.7 mS/cm, 1.75 mS/cm, 1.8 mS/cm, 1.85 mS/cm, 1.9 mS/cm, 1.95 mS/cm, 2 mS/cm, 2.05 mS/cm, 2.1 mS/cm, 2.15 mS/cm, 2.2 mS/cm, 2.25 mS/cm, 2.3 mS/cm, 2.35 mS/cm, 2.4 mS/cm, 2.45 mS/cm, 2.5 mS/cm, 2.55 mS/cm, 2.6 mS/cm, 2.65 mS/cm, 2.7 mS/cm, 2.75 mS/cm, 2.8 mS/cm, 2.85 mS/cm, 2.9 mS/cm, 2.95 mS/cm, 3 mS/cm, 3.05 mS/cm, 3.1 mS/cm, 3.15 mS/cm, 3.2 mS/cm, 3.25 mS/cm, 3.3 mS/cm, 3.35 mS/cm, 3.4 mS/cm, 3.45 mS/cm, 3.5 mS/cm, 3.55 mS/cm, 3.6 mS/cm, 3.65 mS/cm, 3.7 mS/cm, 3.75 mS/cm, 3.8 mS/cm, 3.85 mS/cm, 3.9 mS/cm, 3.95 mS/cm, 4 mS/cm, 4.05 mS/cm, 4.1 mS/cm, 4.15 mS/cm, 4.2 mS/cm, 4.25 mS/cm, 4.3 mS/cm, 4.35 mS/cm, 4.4 mS/cm, 4.45 mS/cm, 4.5 mS/cm, 4.55 mS/cm, 4.6 mS/cm, 4.65 mS/cm, 4.7 mS/cm, 4.75 mS/cm, 4.8 mS/cm, 4.85 mS/cm, 4.9 mS/cm, 4.95 mS/cm, 5 mS/cm, or a range between two of these values.

Using a solid electrolyte having a small particle size widens the contact area with the positive electrode active material, so that the electrochemical characteristics can be more excellent.

The particles may have a BET specific surface area of 15 m²/g or more, for example, 15 m²/g, 17.5 m²/g, 20 m²/g, 22.5 m²/g, 25 m²/g, 27.5 m²/g, 30 m²/g, 32.5 m²/g, 35 m²/g, 37.5 m²/g, 40 m²/g, 42.5 m²/g, 45 m²/g, 47.5 m²/g, 50 m²/g, or a range between two of these values, but is not limited thereto.

### Positive electrode

According to another aspect of the present disclosure, there is provided a positive electrode comprising: the above-described lithium-ion-conductive sulfide-based compound; and a positive electrode active material.

In one example, the positive electrode may be provided as a positive electrode comprising a positive electrode current collector and a positive electrode active material layer formed on the positive electrode current collector. Here, the positive electrode active material layer may comprise a positive electrode active material and the lithium-ion-conductive sulfide-based compound according to the above-described various embodiments.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

As the positive electrode active material, a compound capable of reversible intercalation/deintercalation of lithium can be used. For example, there are cobalt oxide-based (LCO), nickel oxide-based (LNO), manganese oxide-based (LMO), nickel-cobalt-manganese oxide-based (NCM), nickel-cobalt-aluminum oxide-based (NCA), iron phosphate-based (LFP), and those doped and/or coated thereon, and the like, but are not limited thereto.

The positive electrode active material layer can be manufactured by applying, to the positive electrode current collector, a positive electrode slurry composition comprising the sulfide-based compound, the positive electrode active material, and, optionally as needed, a conductive material, a binder, and the like.

In this case, the sulfide-based compound may be comprised in an amount of 0.1 wt% to 15 wt% based on the total weight of the positive electrode active material layer.

Meanwhile, the positive electrode active material may be included at 80 wt% to 99 wt%, more specifically 85 wt% to 98.5 wt%, with respect to the total weight of a positive electrode slurry for forming the positive electrode active material layer. When the positive electrode active material is included in the above content range, excellent capacity characteristics may be exhibited, but the present disclosure is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode can be manufactured according to a conventional positive electrode manufacturing method. Specifically, it can be manufactured by applying a positive electrode slurry composition, which is prepared by dissolving or dispersing a sulfide-based compound, a positive electrode active material, a binder, and a conductive material in a solvent, onto a positive electrode current collector, followed by drying and rolling.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

### Lithium secondary battery

According to still another aspect of the present disclosure, there may be provided a lithium secondary battery comprising the above-described positive electrode.

The lithium secondary battery may comprise a positive electrode, a negative electrode located opposite to the positive electrode, and a separator and an electrolyte interposed between the positive electrode and the negative electrode.

In addition, the lithium secondary battery may also be provided as an anode-free type secondary battery. Here, since the positive electrode is the same as described above, a detailed description thereof is omitted for convenience, and hereinafter, only the remaining components not described above will be described in detail. In addition, the description related to the negative electrode described later should be understood to be described on the premise that a negative electrode is present in the lithium secondary battery.

Meanwhile, the lithium secondary battery may have the separator replaced with a solid electrolyte. The solid electrolyte may be disposed as a separate layer (solid electrolyte layer) between the positive electrode and the negative electrode. In such a case, an electrode slurry composition to which a solid electrolyte is further added can be used when manufacturing the negative electrode.

That is, the lithium secondary battery may include a positive electrode, a negative electrode located opposite to the positive electrode, and a solid electrolyte membrane interposed between the positive electrode and the negative electrode.

The lithium secondary battery may further include a battery case accommodating an electrode assembly of the positive electrode, the negative electrode and the separator, or the electrode assembly of the positive electrode, the negative electrode, and the solid electrolyte membrane, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present disclosure may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present disclosure is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

In the electrolyte, in addition to the above electrolyte constituent components, one or more additives such as a haloalkylene carbonate-based compound such as difluoroethylene carbonate, pyridine, triethyl phosphite, triethanolamine, a cyclic ether, ethylenediamine, n-glyme, hexaphosphoric acid triamide, a nitrobenzene derivative, sulfur, a quinone imine dye, N-substituted oxazolidinone, N,N-substituted imidazolidine, an ethylene glycol dialkyl ether, an ammonium salt, pyrrole, 2-methoxyethanol, or aluminum trichloride may be further comprised for the purpose of improving the lifespan characteristics of the battery, suppressing a decrease in battery capacity, improving the discharge capacity of the battery, and the like. Here, the additive(s) may be included at 0.1 to 5 wt% with respect to the total weight of the electrolyte.

In another example, the lithium secondary battery may be a kind of all-solid-state battery that does not comprise an electrolyte solution and comprises a solid electrolyte layer composed of a solid electrolyte membrane.

Here, the solid electrolyte membrane may refer to a sulfide-based solid electrolyte compound, which is a kind of solid-phase material capable of ion conduction, is formed in a membrane-type structure.

The solid electrolyte membrane can be manufactured according to a conventional method known in the art, and for example, the solid electrolyte membrane can be manufactured by press-molding a powder of a sulfide-based solid electrolyte compound and then processing it into a required shape.

However, since it is difficult to maintain a membrane-type structure with only a sulfide-based compound, the solid electrolyte membrane can be manufactured by mixing a binder.

Here, as the binder, one having excellent binding strength to the sulfide-based compound, having no decrease in ionic conductivity, and having excellent flexibility is preferable. In addition, it should be easily peelable from a release film typically used in the manufacture of a solid electrolyte membrane.

For example, polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluororubber, or various copolymers thereof can be used, and one of them alone or a mixture of two or more thereof can be used.

Such a solid electrolyte membrane can be manufactured by applying a slurry comprising a sulfide-based compound, a binder, and a solvent onto a release film, and then removing the solvent.

In addition, the solid electrolyte membrane may further comprise a conductive material, an auxiliary binder, and the like as needed.

The conductive material is used to impart conductivity so that electron movement accompanying the movement of ions is possible, and its type is not limited as long as it has electronic conductivity without an unnecessary chemical reaction. Examples comprise graphite, carbon black, acetylene black, Ketjen black, furnace black, lamp black, thermal black, carbon fiber, carbon nanotube, graphene, copper, aluminum, nickel, gold, silver, and a conductive polymer.

In the solid electrolyte membrane, the content of the sulfide-based solid electrolyte compound may be 80 to 99.9 wt%, for example, 80 wt%, 80.5 wt%, 81 wt%, 81.5 wt%, 82 wt%, 82.5 wt%, 83 wt%, 83.5 wt%, 84 wt%, 84.5 wt%, 85 wt%, 85.5 wt%, 86 wt%, 86.5 wt%, 87 wt%, 87.5 wt%, 88 wt%, 88.5 wt%, 89 wt%, 89.5 wt%, 90 wt%, 90.5 wt%, 91 wt%, 91.5 wt%, 92 wt%, 92.5 wt%, 93 wt%, 93.5 wt%, 94 wt%, 94.5 wt%, 95 wt%, 95.5 wt%, 96 wt%, 96.5 wt%, 97 wt%, 97.5 wt%, 98 wt%, 98.5 wt%, 99 wt%, 99.5 wt%, 99.9 wt%, or a range between two of these values, but is not limited thereto.

Here, the thickness of the solid electrolyte membrane is not limited, and may be 5 to 300 µm, for example, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, 150 µm, 155 µm, 160 µm, 165 µm, 170 µm, 175 µm, 180 µm, 185 µm, 190 µm, 195 µm, 200 µm, 205 µm, 210 µm, 215 µm, 220 µm, 225 µm, 230 µm, 235 µm, 240 µm, 245 µm, 250 µm, 255 µm, 260 µm, 265 µm, 270 µm, 275 µm, 280 µm, 285 µm, 290 µm, 295 µm, 300 µm, or a range between two of these values.

Meanwhile, the solid electrolyte membrane may have a free-standing characteristic that allows it to be used without a separate support, but is not limited thereto.

Since the lithium secondary battery including the positive electrode according to the present disclosure stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present disclosure is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present disclosure, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present disclosure will be described in further detail with reference to examples. However, these examples are merely provided to exemplify the present disclosure, and thus the scope of the present disclosure will not be construed to be limited by these examples.

### Preparation Example 1. Preparation of sulfide-based compound

### Comparative Example 1

A sulfide-based compound having an average particle size (D₅₀) of 5.30 µm and a Li_{5.5}PS_{4.5}Cl_{1.5} composition was prepared.

### Comparative Example 2

Into a bead mill, 115 parts by weight of anhydrous toluene and 300 parts by weight of ZrO₂ beads having a diameter of 1 mm were introduced, the bead mill was circulated, and then 20 parts by weight of the sulfide-based compound of Comparative Example 1 was introduced to pulverize the slurry. Here, the temperature of the cooling water in the liquid chiller outside the bead mill was maintained at 20 to 25°C. The cooling water was circulated in the order of the chiller, the bead mill, and the chiller. In addition, a propeller-type stirring blade was provided in the slurry tank connected to the bead mill to stir the slurry so that the sulfide-based compound would not agglomerate between each circulation pass of the bead mill.

### Comparative Example 3

A fine sulfide-based compound was prepared in the same manner as in Comparative Example 2, except that the cooling water temperature was maintained at 5°C or less.

### Example 1

A fine sulfide-based compound was prepared in the same manner as in Comparative Example 2, except that the circulation path of the cooling water was changed to the order of the chiller, the bead mill, the slurry tank, and the chiller, the cooling water temperature was maintained at 5°C or less, the propeller-type stirring blade was changed to a saw-type stirring blade, a rod-shaped auxiliary stirrer was installed inside the slurry tank, and nitrogen gas was continuously supplied into the slurry tank.

Here, the rod-shaped auxiliary stirrer was a deironed material installed at a position spaced apart from the stirring shaft of the slurry tank, and generated a vortex in the rotational motion of the slurry without external power.

### Example 2

A fine sulfide-based compound was prepared in the same manner as in Example 1, except that the amount of nitrogen gas supplied into the slurry tank was increased.

### Experimental Example 1. Characteristic analysis of sulfide-based compounds by process

The average particle size (D₅₀) in the slurry was measured for each bead mill pulverization pass of Comparative Example 2 and Example 1, and is shown in FIG. 1.

The oxygen concentration during pulverization of the sulfide-based compound according to Preparation Example 1, and the average particle diameter (D₅₀), BET specific surface area, and ionic conductivity of the pulverized sulfide-based compound were measured and shown in Table 1 below.

**[Table 1]**

| Classification | Comp. Ex. 1 | Comp. Ex. 2 | Comp. Ex. 3 | Example 1 | Example 2 |
|---|---|---|---|---|---|
| Oxygen concentration (wt%) | - | 21.2 | 20.9 | 7.2 | 3.1 |
| D₅₀ (µm) | 5.30 | 0.71 | 0.78 | 0.61 | 0.62 |
| BET (m²/g) | - | 16.19 | 13.66 | 15.63 | 15.30 |
| Ionic conductivity (mS/cm) | 2.83 | 1.17 | 1.35 | 1.93 | 2.38 |

Referring to FIG. 1, in the process of Example 1, the pulverization was completed at a rate approximately twice as fast as that of the process of Comparative Example 2.

Meanwhile, referring to Table 1, it can be confirmed that the ionic conductivity is more excellent in the sulfide-based compound of the Examples, in which the pulverization process was completed rapidly and the oxygen concentration was minimized.

In addition, in Comparative Example 3, in which only the cooling water temperature was decreased, the ionic conductivity increased somewhat compared to Comparative Example 2, but the BET specific surface area decreased, and due to insufficient cooling efficiency, the ionic conductivity was lower than that of the fine sulfide-based compound of the Examples.

According to the present disclosure, the particle size of an argyrodite-type sulfide-based compound can be controlled more rapidly, so that product deterioration that may occur during manufacturing can be minimized, and a wide contact interface can be formed, whereby excellent performance as a solid electrolyte for a positive electrode composite can be obtained.

In addition to the above-described effects, specific effects of the present disclosure are described while explaining specific details for the present disclosure.

Although embodiments of the present disclosure have been described above, those skilled in the art can make various modifications and changes to the present disclosure by adding, changing, or deleting components without departing from the spirit of the present disclosure as set forth in the claims, which will be included within the scope of rights of the present disclosure.

## Claims

1. A method of manufacturing a lithium-ion-conductive sulfide-based compound, comprising:
(a) preparing a sulfide-based compound comprising a crystal phase of an argyrodite-type crystal structure; and
(b) pulverizing the sulfide-based compound to obtain finely pulverized sulfide-based compound particles having an average particle size (D₅₀) of 0.5 to 1.0 µm.

2. The method of claim 1, wherein the crystal phase of the argyrodite-type crystal structure is represented by the following Chemical Formula 1:
[Chemical Formula 1] Li₇₋ₓPS₆₋ₓXₓ
wherein X is at least one selected from the group consisting of Cl, Br, and I, and 0≤x≤2.

3. The method of claim 1, wherein, in step (b), the pulverization is repeated 2 to 15 times.

4. The method of claim 1, wherein the pulverization is performed by wet pulverization of a slurry comprising a solvent and the sulfide-based compound in a bead mill.

5. The method of claim 1, wherein the pulverization is performed at a temperature of 5°C or lower.

6. The method of claim 5, wherein the pulverizing is performed using a bead mill, a slurry tank connected to the bead mill, and a chiller connected to both the bead mill and the slurry tank,
wherein cooling water is circulated in the order of the chiller, the bead mill, the slurry tank, and the chiller, and
wherein a temperature of the cooling water is maintained at 5°C or lower.

7. The method of claim 6, wherein the slurry tank is provided with a saw-type stirring blade, and the bead mill is charged with beads in an amount of 35 to 90 wt% based on the slurry.

8. The method of claim 6, wherein the slurry tank is provided with an auxiliary stirring device and a stirring blade having a shaft, and the auxiliary stirring device is positioned to be spaced apart from the shaft of the stirring blade to form a vortex in the slurry.

9. The method of claim 6, wherein an inert gas is introduced into the slurry tank during the pulverizing.

10. The method of claim 9, wherein an oxygen concentration in the slurry tank is less than 21.2 wt%.

11. A lithium-ion-conductive sulfide-based compound, which is manufactured by the manufacturing method according to any one of claims 1 to 10, has an average particle size (D₅₀) of 0.5 to 1.0 µm, and has an ionic conductivity at 25°C of more than 1.17 mS/cm.
